(19) Europäisches Patentamt
European Patent Office
Office européen des brevets

(11) **EP 4 207 077 A1**

(12) **DEMANDE DE BREVET EUROPEEN**

(43) Date de publication:
**05.07.2023 Bulletin 2023/27**

(51) Classification Internationale des Brevets (IPC):
**G06T 11/00** (2006.01)

(21) Numéro de dépôt: **22215760.4**

(52) Classification Coopérative des Brevets (CPC):
**G06T 11/008**

(22) Date de dépôt: **22.12.2022**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **28.12.2021 FR 2114573**

(71) Demandeur: **Commissariat à l'énergie atomique et aux énergies alternatives**
**75015 Paris (FR)**

(72) Inventeurs:
• **BRIARD, Mateo**
**38054 GRENOBLE CEDEX 09 (FR)**
• **ALLIER, Cédric**
**38054 GRENOBLE CEDEX 09 (FR)**
• **PIERRE, William**
**38054 GRENOBLE CEDEX 09 (FR)**

(74) Mandataire: **Brevalex**
**Tour Trinity**
**1 Bis Esplanade de La Défense**
**CS 60347**
**92035 Paris La Défense Cedex (FR)**

(54) **CORRECTION D'ARTEFACTS DE RECONSTRUCTIONS TOMOGRAPHIQUES PAR RESEAUX DE NEURONES**

(57) La présente invention concerne un procédé pour corriger un artefact de reconstruction d'une image tomographique tridimensionnelle. Ledit procédé comprenant les étapes de fournir une image tomographique tridimensionnelle acquise à partir d'un groupement cellulaire, et d'appliquer à ladite image un réseau de neurones entraîné préalablement pour déterminer une image tomographique corrigée.

[Fig. 1]

Fig. 1

## Description

### Domaine technique et état de la technique antérieure

La présente invention concerne le domaine de la reconstruction tomographique en 3D à partir d'image sans phase. Pour ce genre d'image, uniquement l'intensité de la lumière est acquise, comme pour une photo normale. La technique comprend acquérir plusieurs images de l'objet étudié pour de nombreux angles d'illuminations différents. A partir de ces images et d'un modèle de propagation de la lumière, on résout un problème inverse dont le but est de retrouver une matrice 3D de l'indice optique de l'objet qui a créé les diffractions mesurées. Dans le cadre d'un angle maximal d'illumination restreint, par exemple si l'angle d'illumination maximal ne dépasse pas les 20°, il y a une perte d'information importante. Cette information manquante se caractérise principalement par un allongement des images reconstruites dans l'axe perpendiculaire au plan de l'échantillon. De plus, le fait de n'acquérir que l'intensité de la lumière crée une deuxième perte d'information, parce-que la phase de l'image est perdue. Cette information manquante se répercute principalement dans l'imprécision des mesures d'indices optiques.

La présente invention concerne ainsi un procédé pour corriger les artefacts de reconstructions 3D à l'aide d'un réseau de neurones entraîné.

### EXPOSÉ DE L'INVENTION

C'est par conséquent un but de la présente invention d'offrir un procédé pour corriger un artefact de reconstruction d'une image tomographique tridimensionnelle acquise par un dispositif d'acquisition d'image tomographique. Le procédé comprend les étapes de :

- fournir une image tomographique tridimensionnelle acquise, ladite image tomographique tridimensionnelle acquise étant reconstruite par un algorithme de reconstruction à partir d'une pluralité d'images élémentaires acquises par ledit dispositif d'acquisition d'image tomographique à partir d'un groupement cellulaire,
- appliquer à ladite image tomographique tridimensionnelle acquise un réseau de neurones entraîné à corriger l'artefact de reconstruction, et
- déterminer une image tomographique corrigée.

Ledit réseau de neurones a préalablement été entraîné par les étapes suivantes :

- fournir un modèle tridimensionnel numérique simulé comprenant au moins un premier objet volumique représentant un premier indice optique,
- obtenir une image tomographique tridimensionnelle simulée reconstruite par l'algorithme de reconstruction à partir desdites images élémentaires simulées,

- comparer le modèle tridimensionnel numérique simulé et l'image tomographique tridimensionnelle simulée, et
- entraîner le réseau de neurones pour corriger l'artefact de reconstruction correspondant à une différence entre ledit modèle tridimensionnel numérique simulé et ladite image tomographique tridimensionnelle simulée.

Avantageusement, le modèle tridimensionnel numérique simulé comprend un deuxième objet volumique représentant un deuxième indice optique différent du premier indice optique. Les surfaces des premier et deuxième objets volumiques sont déformées par un bruit de déformation.

Ledit modèle tridimensionnel numérique simulé utilisé pour l'entrainement du réseau de neurones peut comprendre un seul troisième objet volumique creux avec un bord déformée par un bruit de déformation, le bord représentant un troisième indice optique, le premier et le deuxième objet volumique étant placées à un intérieur du troisième objet volumique creux.

Avantageusement, un intérieur d'au moins le premier objet volumique comprend une pluralité de mini objets volumiques, chaque mini objet volumique de la pluralité présentant un indice optique différent de l'indice optique du premier objet volumique, la surface de chaque mini objet volumique étant déformée par un bruit de déformation.

A titre d'exemple, le bruit de déformation est un bruit de Perlin.

Les indices optiques de la pluralité de mini objets volumiques peuvent présenter une première variation aléatoire autour d'une première valeur moyenne.

Selon une variante, le modèle tridimensionnel numérique comprend une pluralité d'objets volumiques et dans lequel les indices optiques de la pluralité d'objets volumiques présentent une deuxième variation aléatoire autour d'une deuxième valeur moyenne. Ladite deuxième variation aléatoire peut être inférieure par rapport à la première variation aléatoire et/ou la deuxième moyenne peut être inférieure par rapport à la première moyenne.

En outre, l'image tomographique tridimensionnelle acquise à partir d'un groupement cellulaire et l'image tomographique tridimensionnelle simulé à partir du modèle peuvent être fournies sous forme de tranches dans un plan X-Y parallèle à un plan d'acquisition. Dans ce cas, le réseau de neurones peut être un premier réseau de neurones et configuré pour fournir une tranche corrigée à partir d'une pluralité de tranches en entrée. Il devient ainsi possible de :

- fournir ladite image tomographique tridimensionnelle acquise et ladite image tomographique tridimensionnelle simulée sous forme de M tranches dans un plan X-Z,
- entraîner un deuxième réseau de neurones pour fournir une tranche corrigée dans le plan X-Z,
- fournir ladite image tomographique tridimensionnelle acquise et ladite image tomographique tridimensionnelle simulée sous forme de M tranches dans un plan Y-Z,
- continuer d'entraîner ledit deuxième réseau de neurones pour fournir une tranche corrigée dans le plan Y-Z,
- appliquer ledit deuxième réseau de neurones pour corriger l'image tomographique tridimensionnelle acquise et fournie dans le plan X-Z pour obtenir une première image transverse,
- appliquer ledit deuxième réseau de neurones pour corriger l'image tomographique tridimensionnelle acquise et fournie dans le plan Y-Z pour obtenir une deuxième image transverse,
- créer un filtre à partir de la première et la deuxième image transverse,
- multiplier le filtre avec l'image tomographique corrigée obtenue par l'application du premier réseau de neurones. L'étape de fournir une image tomographique tridimensionnelle acquise peut aussi comprendre de fournir un volume d'initialisation formant une base pour l'image tomographique à reconstruire, dans lequel l'image tomographique corrigée par l'application du réseau de neurones est utilisée comme volume d'initialisation.

Avantageusement, chaque image élémentaire est acquise avec un angle d'illumination différent, de préférence une différence entre deux angles d'illumination étant de 40° ou moins.

**BRÈVE DESCRIPTION DES DESSINS**

La présente invention sera mieux comprise sur la base de la description qui va suivre et des dessins en annexe sur lesquels :

[Fig. 1] montre un dispositif d'acquisition d'images tomographiques tridimensionnelles à partir d'un groupement cellulaire,
[Fig. 2a] et
[Fig. 2b] montrent une image tomographique acquise,
[Fig. 3a] et
[Fig. 3b] montrent un modèle numérique,
[Fig. 4a]
[Fig. 4b]

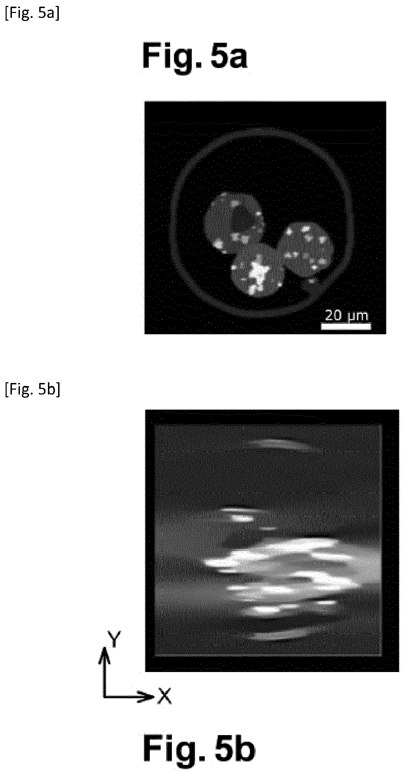

[Fig. 5a], et
[Fig. 5b] montrent un modèle numérique et une image tomographique simulée,

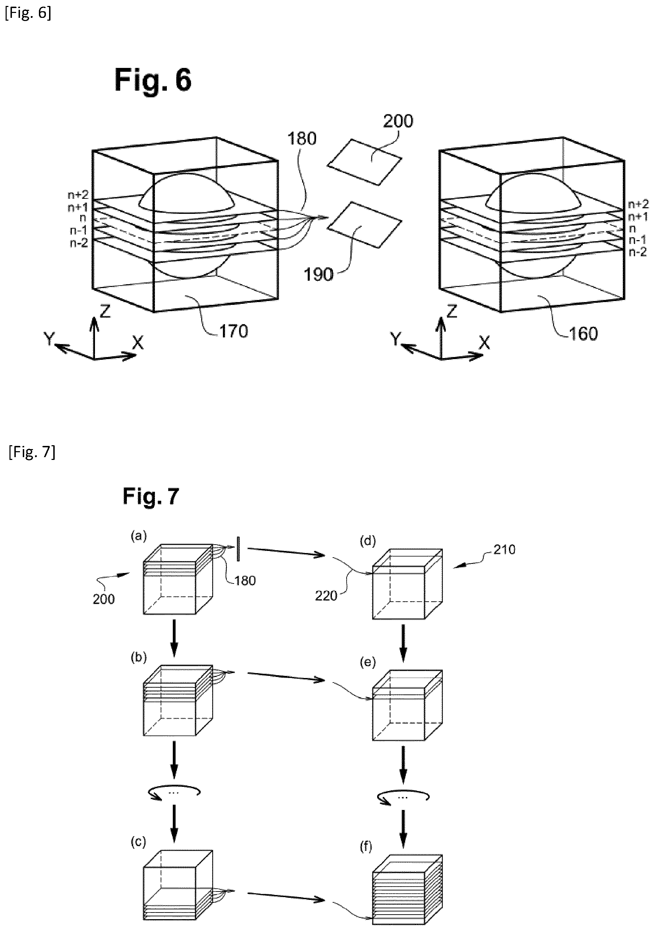

[Fig. 6] montre un entrainement d'un réseau de neurones,
[Fig. 7] montre une correction d'une image tomographique acquise,

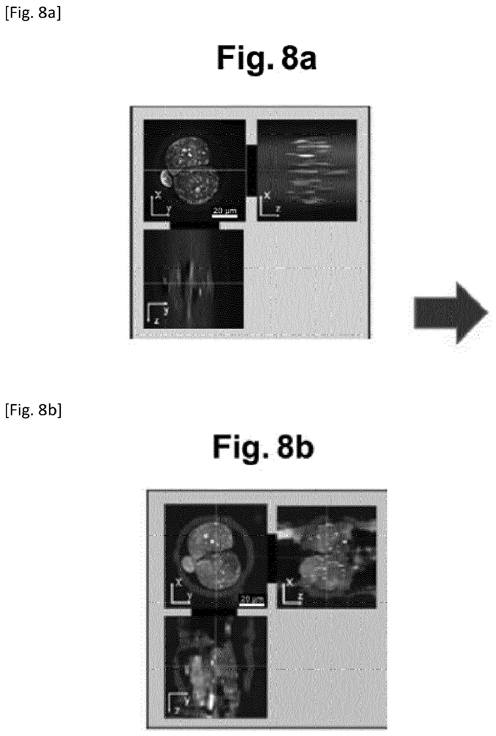

[Fig. 8a] et
[Fig. 8b] montrent un exemple d'image tomographique corrigée,
[Fig. 9a]
[Fig. 9b]

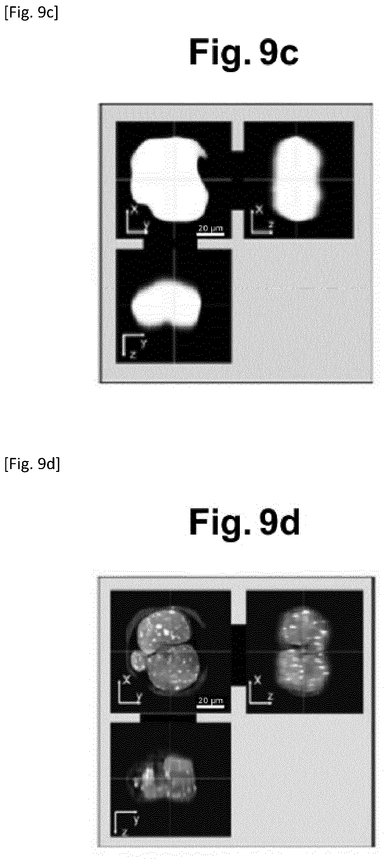

[Fig. 9c] et
[Fig. 9d] montrent un filtre.

**Exposé détaillé de modes de réalisation particuliers**

Dans la description suivante une « image tomographique tridimensionnelle acquise à partir d'un groupement cellulaire » ou « image tomographique acquise » désigne une image tridimensionnelle obtenue à partir d'un procédé d'acquisition d'images élémentaires à l'aide d'un dispositif d'imagerie et de traitement des images élémentaires. Par une image tomographique tridimensionnelle (acquise à partir d'un groupement cellulaire ou simulé à partir d'un modèle tridimensionnel numérique, voir ci-dessous) nous entendons une matrice tridimensionnelle (3D) qui comprend à chaque position comme entrée un nombre réel ou un nombre imaginaire ou un nombre complexe.

Dans le cas d'un nombre complexe ($n = a + i\,b$) il s'agit d'un indice optique complexe ou indice de réfraction. Dans le cas d'un nombre réel il s'agit de la partie réelle de l'indice optique complexe ($a$) qui renseigne le déphasage d'une lumière (phase shift). Dans le cas d'un nombre imaginaire il s'agit de la partie imaginaire de l'indice optique complexe qui renseigne sur l'absorption de la lumière.

La valeur de l'entrée ($n$ ou $a$ ou $b$) représente un « saut d'indice » par rapport au milieu optique d'entourage. Autrement dit, le saut d'indice correspond à la différence entre la valeur de l'indice optique à cet endroit de l'objet et l'indice optique du milieu dans lequel l'objet est placé. Par exemple, un saut d'indice de 0.1 est considéré si on place une bille d'indice de réfraction de 1.43 dans de l'eau dont l'indice de réfraction est 1.33.

Ainsi, l'image tomographique tridimensionnelle comprend comme entrée à chaque endroit le saut de la partie réelle de l'indice optique ou le saut de la partie imaginaire de l'indice optique ou le saut de l'indice optique complexe.

De manière générale, le procédé décrit peut-être mis en oeuvre en utilisant la partie réelle ($a$), la partie imaginaire ($b$) ou le nombre complexe ($n = a + i\,b$) de l'indice optique.

Une « image tomographique tridimensionnelle simulée à partir d'un modèle tridimensionnel numérique » ou « image tomographique simulée » est obtenue à partir d'un modèle numérique par simulation sur ordinateur. Un simulateur du dispositif d'imagerie est utilisé pour déterminer les images élémentaires d'intensité à partir du modèle numérique. Ensuite les images élémentaires simulées sont traitées pour obtenir l'image tomographique simulée. Le même algorithme de traitement des images élémentaires est utilisé pour obtenir l'image tomographique acquise ou l'image tomographique simulée. Ledit modèle est une matrice tridimensionnelle comprenant comme entrée à chaque endroit le saut de l'indice optique comme expliqué ci-dessus. Ainsi, il peut s'agir du saut de la partie réelle de l'indice optique ou du saut de la partie imaginaire de l'indice optique ou du saut de l'indice optique complexe.

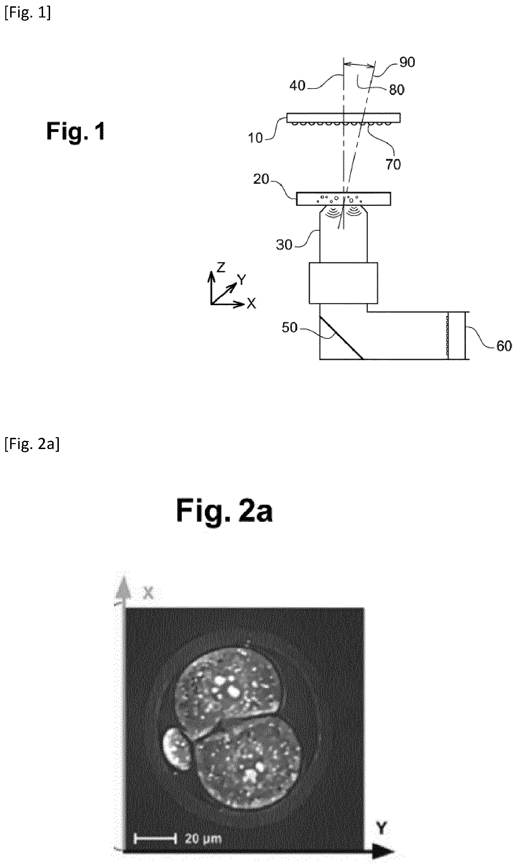

Une « image élémentaire acquise » est une image d'intensité acquise dans un plan d'acquisition (X-Y) par le dispositif d'imagerie, montré dans la figure 1.

Une « image élémentaire simulée » est une image d'intensité simulée à partir du modèle numérique. Elle correspond à une image élémentaire qui serait obtenue si un échantillon physique, identique au modèle numérique, était utilisé avec le dispositif d'imagerie.

Une « tranche de l'image tomographique acquise » est un extrait d'une épaisseur donnée dans un plan XY, XZ ou YZ, obtenue à partir de l'image tomographique acquise. Une tranche de l'image tomographique simulée est un extrait d'une épaisseur donnée dans un plan XY, XZ ou YZ, obtenue à partir de l'image tomographique simulée. La tranche comprend ainsi dans les deux cas (acquis ou simulé) le saut d'indice optique (partie réelle, partie imaginaire ou nombre complexe, voir ci-dessus).

Une « coupe du modèle » est un extrait du modèle d'une épaisseur donnée dans un plan XY, XZ ou YZ. La tranche comprend ainsi le saut d'indice optique (partie réelle, partie imaginaire ou nombre complexe, voir ci-dessus).

La figure 1 montre un exemple de dispositif pour acquérir une image tomographique tridimensionnelle à partir d'un groupement cellulaire. Un système de coordonnées cartésien est également montré et sera utilisé dans les figures ultérieures.

La figure 1 montre un groupement cellulaire (20) duquel une image tomographique tridimensionnelle est acquise. Par exemple, le groupement cellulaire peut être un échantillon de tissue. L'échantillon peut comprendre entre 1 et 200 cellules et présenter une taille de 0 à 200 micromètres. La figure 1 montre également une grille de LED (10) avec un LED illuminé (70) et une direction de propagation (90) d'une lumière émise par le LED illuminé (70). Également montrés sont un objectif (30), un miroir (50) et un capteur d'image numérique (60). Le capteur d'image peut être un capteur CMOS. Dans l'exemple montré et par la suite, le plan d'acquisition est le plan X-Y.

Pour acquérir une image élémentaire de transmission avec un angle d'illumination (80) donné, une LED particulière (70) de la grille de LED (10) est illuminée pendant que les autres LED restent éteintes. La lumière de la LED illuminée (70) traverse l'échantillon selon une direction de propagation (90) qui présente un angle d'illumination (80) par rapport à l'échantillon. Ledit angle d'illumination dépend de la position de la LED illuminé sur la grille de LED. Après avoir traversé l'échantillon, la lumière transmise est focalisée sur le capteur d'image (60) par l'objectif (30).

Pour obtenir une image tomographique tridimensionnelle il est nécessaire d'acquérir une pluralité d'images élémentaires de transmission à partir du groupement cellulaire, chaque image élémentaire étant acquise avec un angle d'illumination différent. Ainsi, une première image élémentaire est acquise avec seulement une première LED sur la grille de LED (10) allumé pendant que les autres LED restent éteintes. Une deuxième image élémentaire est acquise avec une deuxième LED, différente de la première LED allumée, pendant que les autres LED restent éteintes. La première et la deuxième image élémentaire sont ainsi acquises avec des angles d'illumination différents, dépendant de la position de la première et deuxième LED sur la grille de LED. Ensuite d'autres images élémentaires sont acquises utilisant les autres LED de la grille de LED. Avantageusement, une différence entre deux angles d'illumination (80) est de 40° ou moins. Autrement dit, une plage d'angles est de 40° ou moins. Par une plage d'angles on comprend la différence entre l'angle d'illumination le plus grand et l'angle d'illumination le plus petit. Autrement dit, l'angle d'illumination (80) entre un axe central perpendiculaire au plan de l'échantillon (20) et la direction de propagation (90) de la lumière est égal ou plus petit que 20° pour toutes les images élémentaires acquises. Dans le dispositif montré dans la figure 1 la plage d'angles qui peut être obtenu est limitée à une valeur en dessous de 180°.

De façon alternative, un appareil de tomographie spiralé ou hélicoïdal pourrait être utilisé. Dans ce cas, la source de lumière et le capteur d'image ont une position relative fixe et tournent sur un cercle autour de l'échantillon. Ce dispositif permet une réalisation d'une plage d'angles jusqu'à 360°.

De façon alternative, l'image tomographique tridimensionnelle peut être obtenue par le dispositif et procédé décrit dans référence [1] ou référence [2].

Une image tomographique tridimensionnelle est ensuite reconstruite à partir des images élémentaires (image tomographique acquise). L'image tomographique tridimensionnelle est un nuage de points ou, autrement dit, une matrice tridimensionnelle. Comme expliqué auparavant, chaque point de la matrice comprend une valeur correspondant à l'indice optique de l'échantillon au même endroit. Ledit procédé de reconstruction repose sur un algorithme algébrique basé sur une représentation matricielle du problème et est décrit en détail dans la référence [1] ou dans la référence [2]. Au départ, l'algorithme de reconstruction est initialisé par un volume d'initialisation. Le volume d'initialisation forme une base pour l'image tomographique tridimensionnelle acquise qui sera reconstruite. Habituellement, le volume d'initialisation est un volume comprenant aucune information. Autrement dit, il s'agit d'un volume d'indice de réfraction ou indice optique constant et nul.

Par exemple, pour un travail de développement, il est également possible de simuler une image tomographique tridimensionnelle à partir d'un modèle tridimensionnel numérique. Dans ce cas, le modèle numérique remplace l'échantillon. Le modèle numérique est défini sur un ordinateur. Le modèle numérique comprend un nuage de points, chaque point ayant une valeur représentant un indice de réfraction ou un indice optique.

Une pluralité d'images élémentaires de transmission est simulée à partir du modèle numérique. Chaque image élémentaire simulée correspond à une acquisition faite avec un angle d'illumination différent. Ensuite, une image tomographique tridimensionnelle est reconstruite à partir des images élémentaires simulées par l'algorithme algébrique, voir références [1] ou [2]. Le résultat sera appelé image tomographique tridimensionnelle simulé à partir du modèle tridimensionnel ou image tomographique simulée.

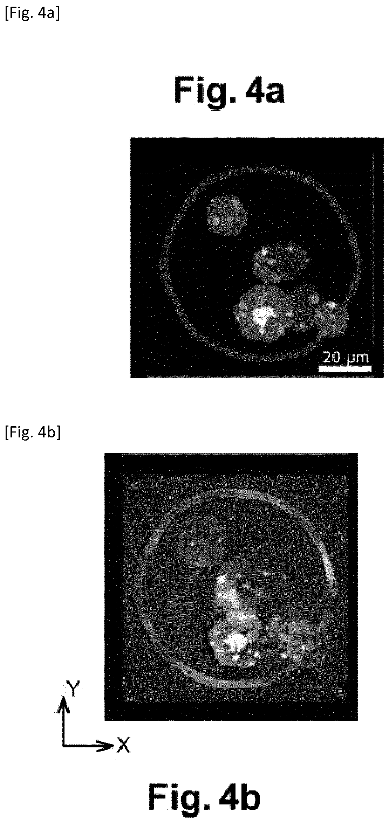

Une comparaison entre le modèle numérique et l'image tomographique simulée permet de facilement vérifier un fonctionnement de l'algorithme algébrique de reconstruction. Ladite différence permet également d'entrainer un réseau de neurones pour corriger cette différence, comme sera décrit par la suite. Les figures 4a et 5b montrent une coupe dans un plan X-Y ou X-Z obtenue directement à partir d'un modèle tridimensionnel numérique. Dans le cas présenté la partie réelle de l'indice optique a été utilisé. De manière générale, le procédé décrit peut-être mis en oeuvre en utilisant la partie réelle, la partie imaginaire ou le nombre complexe de l'indice optique. Les figures permettent ainsi d'apercevoir la forme des objets dont l'acquisition d'image tomographique est simulée.

Les figures 4b et 5b montrent une tranche de l'image tomographique simulée qui est située à la même position que la coupe des images 4a et 5a. La différence de forme entre

la figure 4a et 4b ou entre la figure 5a et 5b permet d'évaluer ledit algorithme de reconstruction. On observe que les figures 4a et 4b montrent des formes très similaires.

Les figures 5a et 5b sont très différentes l'une de l'autre. Les formes sphéroïdiques du modèle, montrées dans la figure 5a, ne peuvent pas être imagées avec les techniques d'acquisition et de reconstruction mises en oeuvre. Une déformation importante dans la direction X a lieu.

De manière générale, ladite différence peut être qualifiée d'artefact de reconstruction. La différence entre le modèle numérique et l'image tomographique simulée peut être causé par un algorithme de reconstruction imparfait. Elle peut aussi apparaître dans le cas où la plage de l'angle d'illumination est limitée à une valeur en dessous de 360°. Par exemple, une plage d'angles de 40° ou de 20° cause une perte d'information causant un artefact de reconstruction.

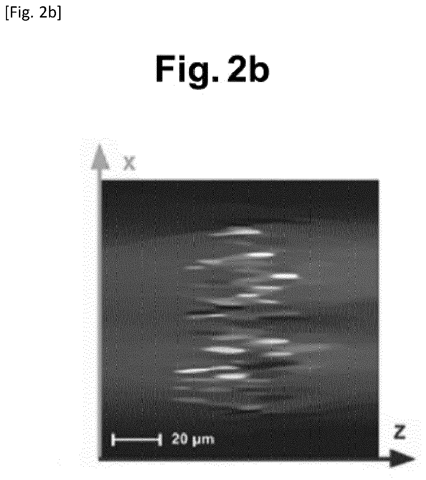

Les figures 2a et la figure 2b montrent l'artefact de reconstruction causé par une acquisition sur une plage d'angles en dessous de 360°. Dans le cas montré, une acquisition sur une plage de 40° a été effectuée à partir d'un groupement cellulaire de moins de 5 cellules. Les deux figures montrent l'image tomographique acquise. La figure 2a montre une tranche dans un plan X-Y, la figure 2b montre une tranche dans un plan X-Z. On observe que la figure 2a montre une forme claire de cellules de forme sphéroïdique. Le plan X-Y correspond au plan duquel la plus grande quantité d'informations a été obtenue, voir figure 1. Le plan X-Z montre une déformation longitudinale des cellules sphéroïdiques en la direction Z. La déformation est causée par un manque d'information due à la plage d'angles limitée.

L'artefact de reconstruction peut être corrigé par l'application d'un réseau de neurones qui a été entraîné à reconnaître ledit artefact et d'appliquer une correction à l'image tomographique acquise. Ainsi, un procédé pour corriger l'artefact de reconstruction de l'image tomographique tridimensionnelle comprend les étapes de :

- fournir une image tomographique tridimensionnelle acquise, l'image tomographique tridimensionnelle acquise étant reconstruite par l'algorithme de reconstruction à partir d'une pluralité d'images élémentaires acquises par le dispositif d'acquisition d'image tomographique à partir d'un groupement cellulaire, à titre d'exemple le groupement cellulaire comprenant de préférence entre 1 et 50 ou moins de 200 cellules,

- appliquer à ladite image tomographique tridimensionnelle acquise un réseau de neurones entraîné à corriger l'artefact de reconstruction, pour déterminer une image corrigée.Le réseau de neurones utilisé a été entraîné en utilisant un modèle numérique. Comme décrit auparavant, l'utilisation d'un tel modèle permet de mettre en évidence l'artefact de reconstruction. Un réseau de neurones peut ainsi être entraîné à corriger l'artefact de reconstruction en mettant à sa disposition, durant une phase d'entrainement, une image tomographique simulée et ledit modèle lui-même. Ainsi, le réseau de neurones a été entraîné par les étapes suivantes :

- fournir un modèle tridimensionnel numérique simulé (dit modèle numérique),

- déterminer à partir du modèle numérique une pluralité d'images élémentaires simulées,

- obtenir une image tomographique tridimensionnelle simulée, reconstruite par l'algorithme de reconstruction à partir à partir desdites images élémentaires simulées, et

- ensuite entraîner le réseau de neurones pour corriger l'artefact de reconstruction correspondant à une différence entre le modèle numérique et l'image tomographique simulée.

La qualité de la correction de l'image tomographique tridimensionnelle acquise à partir d'un groupement cellulaire dépend du modèle numérique utilisé pour l'entrainement du réseau de neurones.

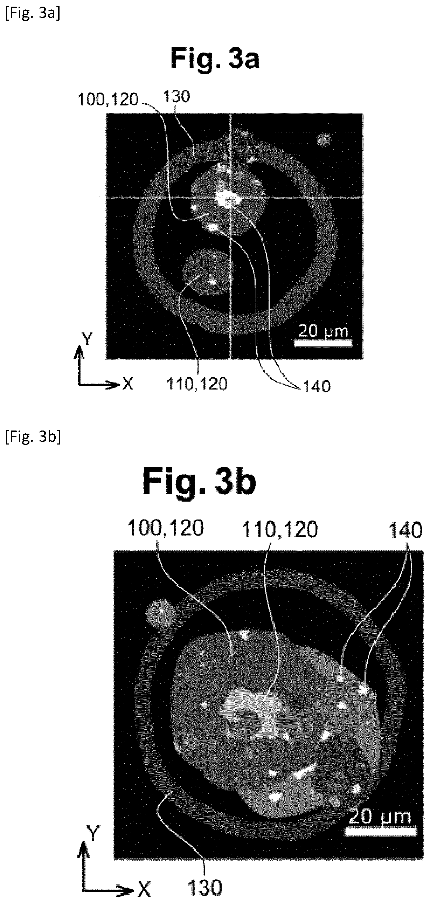

Les figures 3a et 3b montrent un modèle numérique tridimensionnel utilisé pour l'entrainement du réseau de neurones. Les figures 3a et 3b montrent une coupe du modèle selon le plan X-Y ou X-Z.

Un très bon résultat peut être obtenu en utilisant un modèle numérique comprenant au moins un premier objet volumique (110) représentant un premier indice optique. La surface du premier objet volumique peut être déformée par un bruit de déformation. A titre d'exemple, le bruit de déformation peut être un bruit blanc, un bruit de Perlin ou un tout autre bruit du même type.

Avantageusement, le modèle numérique comprend en outre un deuxième objet volumique (120) représentant un deuxième indice optique différent du premier indice optique, la surface du deuxième objet volumique pouvant également être déformée par un bruit de déformation, de préférence un bruit de Perlin. Le bruit utilisé peut également être un bruit blanc. L'utilisation d'un modèle numérique comprenant des premier et deuxième objets volumiques permet de diminuer le nombre d'objets pour l'entrainement.

Un objet volumique ou un mini objet volumique (voir ci-dessous) peut par exemple être une sphère. Il peut également s'agir d'un cylindre, un cube, ou un autre objet géométrique tridimensionnel avec une surface fermée. Un objet volumique utilisable pour le modèle numérique peut aussi être créé par le procédé suivant :

- générer une carte tridimensionnelle de bruit de déformation de type bruit de Perlin,
- définir un seuil, par exemple à une valeur de 0.3,
- associer à tous les points avec une valeur en dessous du seuil une valeur de zéro.

En résultat, on obtient un objet volumique utilisable pour ledit modèle numérique. Un tel modèle est particulièrement bien adapté à une acquisition d'images d'un groupement cellulaire. Un tel modèle reprend les caractéristiques pertinentes trouvées dans un échantillon de cellules mais reste assez générique pour éviter un sur-apprentissage (anglais : overfitting) du modèle de neurones.

A titre d'exemple, la surface de l'objet volumique peut être déformée par un bruit de déformation de type bruit de Perlin de la façon suivante : On génère un champ de bruit de Perlin tridimensionnel dans lequel chaque point de l'espace a une valeur de bruit positive ou négative. Ensuite on échantillonne des points sur la surface de l'objet volumique, et chaque point est décalé radialement vers l'objet volumique ou à l'opposé en fonction de la valeur du bruit à cet endroit. Il est également possible d'utiliser un autre bruit à la place du bruit de Perlin, par exemple un bruit blanc.

Il est également possible d'utiliser une pluralité d'objets volumiques (120), la pluralité d'objets volumiques comprenant par exemple entre 10 et 20 objets volumiques, plus de 10 objets volumiques ou moins de 20 objets volumiques. Dans ce cas, il est également possible de prévoir une ou plusieurs objets volumiques placés sur le bord du troisième objet volumique creux (voir ci-dessous), mais une majorité de la pluralité d'objets volumiques est placé à l'intérieur du troisième objet volumique creux. Une intensité du bruit de Perlin ou d'un autre bruit utilisé, comme un bruit blanc, peut varier. Les variations peuvent être comprises entre -30% et+ 30% d'une extension de l'objet volumique. Une taille des objets volumiques peut être comprise entre 80 et 90 micromètres.

Avantageusement, le modèle peut comprendre un seul troisième objet volumique creux (130) avec un bord déformé par un bruit de Perlin ou par un autre bruit utilisé de façon alternative. Le bord est déformé par le bruit, de préférence par le bruit de Perlin de la manière suivante :

- on génère un champ de bruit tridimensionnel dans lequel chaque point de l'espace a une valeur de bruit positive ou négative,
- ensuite on échantillonne des points sur la surface de l'objet volumique, et chaque point est décalé radialement vers l'objet volumique ou à l'opposé en fonction de la valeur du bruit à cet endroit.

Le bord présente un troisième indice optique, qui est avantageusement différent de l'indice optique des objets volumiques. Le premier et le deuxième objet volumique ou la pluralité d'objets volumiques est placée à un intérieur du troisième objet volumique creux.

Le modèle peut encore être avantageusement amélioré en plaçant une pluralité de mini objets volumiques (140) au sein de chaque objet volumique. Une pluralité de mini objets volumiques peut comprendre plus de 70 et/ou moins de 160 mini objets volumiques Ainsi, le premier objet volumique et le deuxième objet volumique ou chaque objet volumique de la pluralité d'objets volumiques peut comprendre plusieurs mini objets volumiques ou une pluralité de mini objets volumiques. Autrement dit, le premier objet volumique comprend une première pluralité de mini objets volumiques, la deuxième sphère comprend une deuxième pluralité de mini objets volumiques, et ainsi de suite. Chaque mini objet volumique présente un indice optique différent de l'indice optique de l'objet volumique dans lequel ledit mini objet volumique est placé. Par exemple, concernant le premier objet volumique, chaque mini objet volumique de la première pluralité de mini objets volumiques présente un indice optique différent de l'indice optique du premier objet volumique.

La surface de chaque mini objet volumique est déformée par un bruit, de préférence un bruit de Perlin, de la manière suivante : on génère un champ de bruit tridimensionnel dans lequel chaque point de l'espace a une valeur de bruit positive ou négative. Ensuite on échantillonne des points sur la surface de l'objet volumique, et chaque point est décalé radialement vers l'objet volumique ou à l'opposé en fonction de la valeur du bruit à cet endroit.

Avantageusement, les indices optiques au sein de chaque pluralité de mini-objets volumiques présentent une première variation aléatoire autour d'une première valeur moyenne. Par exemple, une valeur moyenne peut être de 0.01 et une variation peut être de 0.005. Une taille des mini objets volumiques peut être comprise entre 0.2 et 25 micromètres.

Ainsi, les indices optiques de la pluralité d'objets volumiques peuvent présenter une variation aléatoire autour d'une valeur moyenne. Pour différencier, cette variation aléatoire et cette valeur moyenne vont être désignés deuxième variation aléatoire et deuxième valeur moyenne. Les indices optiques des mini objets volumiques au sein d'une pluralité de mini objets volumiques peuvent présenter une première variation aléatoire autour d'une première valeur moyenne.

Avantageusement, la deuxième variation aléatoire est inférieure par rapport à la première variation aléatoire et/ou dans lequel la deuxième moyenne est inférieure par rapport à la première moyenne.

De façon alternative, le procédé suivant peut être employé :

On détermine un nombre aléatoire entre 10 et 20. Ce numéro va déterminer le nombre d'objets volumiques, représentant des cellules, que l'on va générer. Chaque objet volumique sera déformé avec le bruit, de préférence avec le bruit de Perlin. Puis chaque objet volumique est rempli avec un indice optique constant de valeur aléatoire entre 0.01 et 0.02. A l'intérieur de chaque objet volumique on ajoute un nombre aléatoire de mini objets volumiques (représentant des nucleus), compris entre 70 et 160. Chaque mini objet volumique est déformé avec du bruit, de préférence le bruit de Perlin, et ensuite remplie avec un indice optique constant compris entre 0.005 et 0.015.

Pour entraîner le réseau de neurones à corriger l'artefact de l'image tomographique acquise, un modèle composé de 1024 x 1024 x 1024 voxel peut être utilisé. Chaque voxel peut avoir une taille de 0.126 micromètres * 0.126 micromètres * 0.126 micromètres. Les figures 4a et 5a montrent une coupe dans un plan X-Y et X-Z obtenue à partir dudit modèle.

Avantageusement, à partir dudit modèle, l'acquisition de 84 images élémentaires est simulée (images élémentaires non montrées), à 84 angles différentes. Un simulateur du dispositif d'acquisition tomographique (par exemple un simulateur de microscope tomographique) est utilisé.

A partir de ces images élémentaires, l'image tomographique simulée est reconstruite pour obtenir un volume à 128 couches avec 1024*1024*128 voxel, chaque voxel d'une taille de 0.126 micromètres * 0.126 micromètres * 1 micromètre. Ledit modèle numérique de 1024 x 1024 x 1024 voxel est interpolé à la taille 1024*1024*128 voxel pour assurer une comparabilité directe avec l'image tomographique simulée, obtenu à partir dudit modèle.

Le réseau de neurones peut ensuite être entraîné sur la comparaison et correction de l'image tomographique simulée et le modèle numérique lui-même. Dans ce cas, un réseau neuronal tridimensionnel (3D) est utilisé.

De façon alternative, le réseau de neurones peut être entraîné sur la comparaison d'extraits bidimensionnels (2D). Dans ce cas, un réseau de neurones bidimensionnel est utilisé. Les extraits sont obtenus à partir du modèle numérique ou à partir de l'image tomographique simulée.

Les figures 4b et 5b montrent une tranche obtenue à partir de l'image tomographique simulée, situées au même endroit que les coupes des images 4a et 5b, obtenues directement à partir du modèle numérique. Dans le cas présenté la partie réelle de l'indice optique a été utilisé. De manière générale, le procédé décrit peut-être mis en oeuvre en utilisant la partie réelle, la partie imaginaire ou le nombre complexe de l'indice optique. Le réseau de neurones sera ainsi entraîné pour corriger, par exemple, une différence entre les images de la figure 4a et 4b et/ou une différence entre les images de la figure 5a et 5b.

Par exemple, 66 modèles numériques peuvent être générés. Un nombre de 128 coupes est obtenu à partir du modèle numérique directement. Un nombre de 128 tranches est obtenu à partir de l'image tomographique simulé. Chaque coupe peut être obtenue dans un plan X-Y. En résultat, le réseau peut être entraîne sur la comparaison de 8448 coupes dans ce cas d'exemple.

La simulation de l'acquisition de l'image tomographique tridimensionnelle à partir du modèle comprend la simulation des images élémentaires. Par exemple 84 angles peuvent être utilisés. A chaque image élémentaire est associé un angle d'illumination (80).

Avantageusement, le réseau de neurones est entraîné en utilisant les mêmes angles d'illumination que seront utilisés durant une acquisition ultérieure sur un groupement cellulaire. Ainsi, le réseau de neurones peut être particulièrement bien adapté à un nombre d'images élémentaires acquises avec une répartition d'angles d'illumination.

Le réseau de neurones utilisé peut être avantageusement un U-net tel que décrit dans la référence [3]. Un réseau neuronal U-net peut être un réseau tridimensionnel ou bidimensionnel.

De façon avantageuse, un U-net bidimensionnel et un entrainement par extraits 2D est utilisé. Dans ce cas, l'image tomographique tridimensionnelle acquise à partir d'un groupement cellulaire et l'image tomographique tridimensionnelle simulée à partir du modèle sont fournies sous forme de tranches dans un plan X-Y parallèle à un plan d'acquisition, comme montrés dans la figure 1. Le réseau de neurones est configuré pour fournir une tranche corrigée à partir d'une pluralité de tranches en entrée, comme sera détaillé par la suite.

La figure 6 montre une abstraction de l'image tomographique simulée (170). Dans le cas présenté la partie réelle de l'indice optique a été utilisé. De manière générale, le procédé décrit peut-être mis en oeuvre en utilisant la partie réelle, la partie imaginaire ou le nombre complexe de l'indice optique. Ladite image est fournie sous forme de tranches dans un plan X-Y parallèle au plan d'acquisition du dispositif d'acquisition, montré dans la figure 1. Le réseau de neurones (180) est configuré pour prendre plusieurs tranches bidimensionnelles en entrée et de sortir une seule tranche corrigée. Dans l'exemple montré le réseau prend cinq tranches (numéro de tranche : n-2, n-1, n, n+1, n+2) en entrée et détermine une tranche de sortie (190). La position de la tranche de sortie est associée à la position de milieu parmi les tranches d'entrée, autrement dit à la tranche de numéro n. De façon alternative, il est également possible de fournir sept tranches. Il est aussi possible de fournir comme numéro de tranche : [n-4, n-2, n, n+2, n+4] ou [n-8, n-4, n-2, n, n+2, n+4, n+8].

Il est également avantageux de fournir au réseau de neurones un extrait choisi de façon aléatoire de chaque tranche. Autrement dit seulement une partie de la tranche est montrée au réseau de neurones. Montrer un extrait aléatoire permet de jamais montrer deux fois le même couple d'image entrée et sortie au réseau durant l'entrainement et ainsi de limiter fortement les problèmes de sur-apprentissage.

Ensuite, une coupe de la même position n (200) est sortie directement du modèle numérique. Si un extrait aléatoire de la tranche est utilisé, un extrait situé à la même position est utilisé pour la coupe du modèle. La figure 6 montre une abstraction du modèle numérique (160). Les coupes du modèle numérique sont fournies dans un plan X-Y parallèle au plan d'acquisition du dispositif d'acquisition, montré dans la figure 1. Ladite coupe n est indiquée dans le modèle numérique.

Pour entraîner le réseau de neurones, une pluralité de tranches corrigées (190) par le réseau de neurones est déterminée. Une pluralité de coupes de la même position (200) est déterminée à partir du modèle numérique.

On notera Ω l'ensemble de ces images d'entrainement. Les poids du réseau de neurones sont notés W. Selon l'exemple le réseau f_W (180) prend en entrée cinq couches dénommées I_ln et retourne une image I_out (190) à comparer avec l'image de référence ou centrale (n), dénommée I_s (200). L'entrainement du réseau de neurones revient à trouver les poids W qui minimisent la fonction de cout suivante :

[Math 1]

$$cout = \sum_{\Omega_{I_{ln}}} |f_W(I_{ln}) - I_s|^2$$

Cette optimisation peut être effectuée utilisant l'algorithme détaillée dans la référence [4].

La figure 7 montre l'application du réseau de neurones entraîné pour déterminer l'image corrigée. Dans le cas montré, la correction est faite par tranche d'image, par un réseau de neurones entraîné tel que montré et décrit dans la figure 6.

Ce réseau de neurones est particulièrement bien adapté pour corriger l'image tomographique tridimensionnelle acquis à partir d'un groupement cellulaire. Ladite image tomographique acquise est fournie sous forme de tranches dans le plan X-Y qui est parallèle au plan d'acquisition des images élémentaires. Le plan d'acquisition du dispositif d'acquisition est montré dans la figure 1. La figure 7 montre l'image tomographique acquise avant correction (200) et après correction (210). L'image tomographique acquise avant correction (200) est fournie sous forme de tranches dans le plan X-Y. Une première pluralité de tranches est indiquée dans la figure (a). Le réseau de neurones entraîné (180) prend en entrée cette première pluralité de tranches et détermine une tranche corrigée (220). La tranche corrigée fait ensuite partie de l'image tomographique corrigée (210). Toutes les tranches de l'image sont corrigées en appliquant le réseau de neurones (figures (b), (c)), qui prend en entrée la pluralité de tranches pour fournir une tranche corrigée (figures (e), (f)), correspondant à une position de milieu parmi les tranches fournies. Autrement dit, pour une tomographique tridimensionnelle fournie, par exemple, sous forme de 100 tranches et un réseau de neurones prenant en entrée 5 tranches, la tranche 3 sera corrigée à partir des tranches 1 à 5. Ensuite la tranche 4 sera corrigée à partir des tranches 2 à 6 et ainsi de suite. A la fin, la tranche 98 sera corrigée à partir des tranches 96 à 100. Les tranches 1, 2, 99 et 100 ne seront pas corrigées et enlevées.

Les figures 8a et 8b montrent un résultat de correction. La figure 8a montre image tomographique acquise avant correction. Une tranche située dans le plan X-Y, X-Z et Y-Z est montrée. L'orientation du système de coordonnées par rapport au dispositif d'acquisition est montrée dans la figure 1. On observe une forte déformation des images dans le plan X-Z et Y-Z.

La figure 8b montre la même image tomographique après correction. Les mêmes coupes comme dans la figure 8a sont montrées. On observe que les déformations dans le plan X-Z et Y-Z ont été corrigées et une forme sphéroïdique des cellules devient visible.

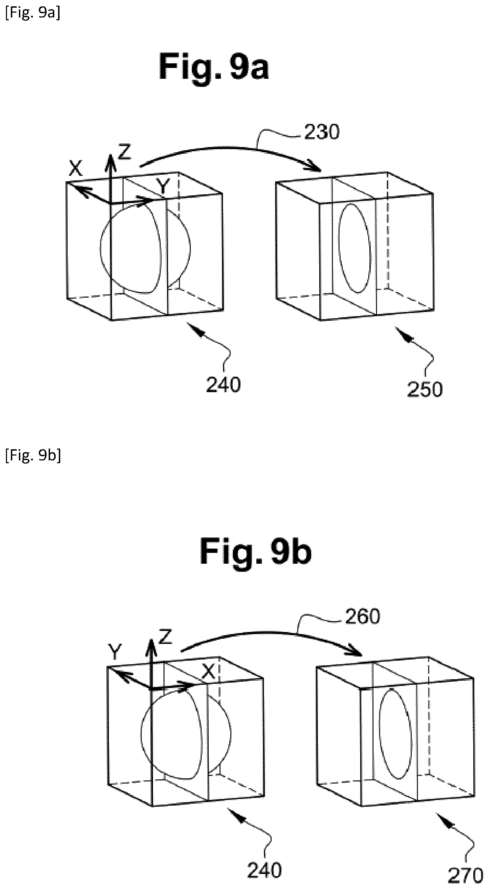

La correction de l'image tomographique peut encore être améliorée par l'application d'un filtre. Le développement du filtre sera expliqué par la suite en combinaison avec les figures 9a - 9d.

L'image tomographique acquise et l'image tomographique simulée sont fournies sous forme de M tranches dans un plan X-Z et M tranches dans un plan Y-Z. Un deuxième réseau de neurones est ensuite entraîné pour fournir une tranche corrigée dans le plan X-Z et Y-Z à partir d'une seule tranche en entrée. Le deuxième réseau de neurones entraîné (230) est ensuite appliqué à toutes les tranches X-Z et toutes les tranches Y-Z de l'image tomographique acquise. En résultat on obtient une première image transverse (250) et une deuxième image transverse (270) ou autrement dit, une image tomographique tridimensionnelle corrigée selon des tranches en X-Z ou Y-Z par le deuxième réseau de neurones (figure 9a et 9b). Autrement dit l'image tomographique tridimensionnelle acquise à partir d'un groupement cellulaire et l'image tomographique tridimensionnelle simulée à partir du modèle sont fournies sous forme de M tranches dans un plan X-Z. Le deuxième réseau de neurones est entraîné pour pouvoir fournir une tranche corrigée dans le plan X-Z. Ensuite l'image tomographique tridimensionnelle acquise à partir d'un groupement cellulaire et l'image tomographique tridimensionnelle simulée à partir du modèle sont fournis encore une fois, cette fois sous forme de M tranches dans un plan Y-Z,

L'entrainement dudit deuxième réseau de neurones est maintenant continué : Il sera entraîné pour fournir une tranche corrigée dans le plan Y-Z.

Ledit deuxième réseau de neurones ainsi entraîné est maintenant utilisé pour corriger l'image tomographique tridimensionnelle acquise à partir d'un groupement cellulaire fourni dans le plan X-Z pour obtenir une première image transverse en résultat. Ensuite, ledit deuxième réseau de neurones est encore une fois appliqué, cette fois pour corriger l'image tomographique tridimensionnelle acquise à partir d'un groupement cellulaire fourni dans le plan Y-Z pour obtenir une deuxième image transverse. Ledit filtre est créé à partir de la première (250) et la deuxième (270) image transverse. La première et la deuxième image transverse sont multipliées. Ensuite, un flou gaussien est appliqué à ce volume 3D. A partir du volume flouté une normalisation est faite, ou les voxels « haute intensité » reçoivent la valeur de 1 et les plus faible la valeur 0. Les pixels de « haute intensité » sont les pixels qui ont une valeur supérieure à un seuil. Ce seuil peut par exemple valoir 0.005. Autrement dit, le filtre est créé à partir de la première et la deuxième image transverse. Le filtre est montré dans la figure 9c. La figure 9c montre un masque tridimensionnel. Un point blanc correspond à un facteur de multiplication 1, un point noir à un facteur de multiplication 0.

Le filtre est ensuite appliqué à l'image tomographique acquise après correction, montré dans la figure 8b ou autrement dit, une image corrigée par un réseau de neurones dans le plan X-Y.

La figure 9d montre le résultat de l'application du filtre. En comparant la figure 9d et la figure 8b on observe que l'application du filtre rend plus claire la définition des cellules sur l'image et améliore ainsi sa qualité.

Le procédé de correction peut encore être amélioré en modifiant la reconstruction de l'image tomographique à partir des images élémentaires. Comme décrit auparavant, l'algorithme de reconstruction est initialisé par un volume d'initialisation formant une base pour un volume à reconstruire. Avantageusement, ledit volume d'initialisation peut être fourni sous forme d'une image tomographique acquise déjà corrigée par l'application d'un réseau de neurones. Par exemple, l'image telle que décrite en combinaison avec la figure 8b peut être utilisée comme volume d'initialisation.

## REFERENCES CITEES

[1] Shwetadwip C et al, Optica Vol. 6, No. 9, September 2019, pages 1211-1219.
[2] Ulugbek S K et al, Optica Vol. 2, No. 6, June 2015, pages 517-522.
[3] Ronneberger, O., Fischer, P., & Brox, T. (2015). U-Net : Convolutional Networks for Biomedical Image Segmentation. In Lecture Notes in Computer Science (pp. 234-241). Springer International Publishing. https://doi.org/10.1007/978-3-319-24574-4_28.
[4] Kingma, D. P. & Ba, J. (2014). Adam: A Method for Stochastic Optimization (cite arxiv:1412.6980. Published as a conférence paper at the 3rd International Conférence for Learning Représentations, San Diego, 2015).

## Revendications

1. Procédé pour corriger un artefact de reconstruction d'une image tomographique tridimensionnelle acquise par un dispositif d'acquisition d'image tomographique, le procédé comprenant les étapes de :

   - fournir une image tomographique tridimensionnelle acquise, ladite image tomographique tridimensionnelle acquise étant reconstruite par un algorithme de reconstruction à partir d'une pluralité d'images élémentaires acquises par ledit dispositif d'acquisition d'image tomographique à partir d'un groupement cellulaire, ,
   - appliquer à ladite image tomographique tridimensionnelle acquise un réseau de neurones (180) entraîné à corriger l'artefact de reconstruction, et
   - déterminer une image tomographique corrigée,

   dans lequel le réseau de neurones a été entraîné par les étapes suivantes :

   - fournir un modèle tridimensionnel numérique simulé comprenant au moins un premier objet volumique (110) représentant un premier indice optique ,
   - déterminer à partir du modèle tridimensionnel numérique simulé une pluralité d'images élémentaires simulées,
   - obtenir une image tomographique tridimensionnelle simulée reconstruite par l'algorithme de reconstruction à partir desdites images élémentaires simulées,

- comparer le modèle tridimensionnel numérique simulé et l'image tomographique tridimensionnelle simulée et ,
- entraîner le réseau de neurones pour corriger l'artefact de reconstruction correspondant à une différence entre ledit modèle tridimensionnel numérique simulé et ladite image tomographique tridimensionnelle simulée .

2. Procédé selon la revendication 1 dans lequel le modèle tridimensionnel numérique simulé comprend en outre un deuxième objet volumique (120) représentant un deuxième indice optique différent du premier indice optique, les surfaces des premier et deuxième objets volumiques étant déformées par un bruit de déformation.

3. Procédé selon la revendication 2 dans lequel le modèle tridimensionnel numérique simulé comprend un seul troisième objet volumique creux (130) avec un bord déformé par un bruit de déformation, le bord représentant un troisième indice optique, les premier et deuxième objets volumiques étant placés à un intérieur du troisième objet volumique creux.

4. Procédé selon l'une quelconque des revendications 1 à 3, dans lequel un intérieur d'au moins le premier objet volumique comprend une pluralité de mini objets volumiques (140), chaque mini objet volumique de ladite pluralité présentant un indice optique différent de l'indice optique du premier objet volumique, la surface de chaque mini objet volumique étant déformée par un bruit de déformation.

5. Procédé selon l'une quelconque des revendications 2 à 4 dans lequel, le bruit de déformation est de préférence un bruit de Perlin.

6. Procédé selon la revendication 4 ou 5, dans lequel les indices optiques de la pluralité de mini objets volumiques présentent une première variation aléatoire autour d'une première valeur moyenne.

7. Procédé selon l'une quelconque des revendications précédentes, dans lequel le modèle tridimensionnel numérique comprend une pluralité d'objets volumiques et dans lequel les indices optiques de la pluralité d'objets volumiques présentent une deuxième variation aléatoire autour d'une deuxième valeur moyenne.

8. Procédé selon la revendication 7 dépendante de la revendication 6, dans lequel la deuxième variation aléatoire est inférieure à la première variation aléatoire et/ou dans lequel la deuxième moyenne est inférieure à la première moyenne.

9. Procédé selon l'une quelconque des revendications précédentes dans lequel, ladite image tomographique tridimensionnelle acquise et ladite image tomographique tridimensionnelle simulée sont fournies sous forme de tranches dans un plan X-Y parallèle à un plan d'acquisition et dans lequel le réseau de neurones est un premier réseau de neurones qui est configuré pour fournir une tranche corrigée à partir d'une pluralité de tranches en entrée.

10. Procédé selon la revendication 9, comprenant les étapes suivantes :

- fournir ladite image tomographique tridimensionnelle acquise et ladite image tomographique tridimensionnelle simulée sous forme de M tranches dans un plan X-Z,
- entraîner un deuxième réseau de neurones pour fournir une tranche corrigée dans le plan X-Z,
- fournir ladite image tomographique tridimensionnelle acquise et ladite image tomographique tridimensionnelle simulée sous forme de M tranches dans un plan Y-Z,
- continuer d'entraîner ledit deuxième réseau de neurones pour fournir une tranche corrigée dans le plan Y-Z,
- appliquer ledit deuxième réseau de neurones pour corriger l'image tomographique tridimensionnelle acquise et fournie dans le plan X-Z pour obtenir une première image transverse,
- appliquer ledit deuxième réseau de neurones pour corriger l'image tomographique tridimensionnelle acquise et fournie dans le plan Y-Z pour obtenir une deuxième image transverse,
- créer un filtre à partir des première et deuxième images transverses,
- multiplier le filtre avec l'image tomographique corrigée obtenue par l'application du premier réseau de neurones.

11. Procédé selon l'une quelconque des revendications précédentes dans lequel l'étape de fournir une image tomographique tridimensionnelle acquise comprend fournir un volume d'initialisation formant une base pour l'image tomographique à reconstruire, dans lequel l'image tomographique corrigée par l'application du réseau de neurones est utilisée comme volume d'initialisation.

12. Procédé selon l'une quelconque des revendications précédentes dans lequel, chaque image élémentaire est acquise avec un angle d'illumination (80) différent, de préférence une différence entre deux angles d'illumination étant de 40° ou moins.

[Fig. 1]

**Fig. 1**

[Fig. 2a]

# Fig. 2a

20 µm

[Fig. 2b]

# Fig. 2b

[Fig. 3a]

# Fig. 3a

[Fig. 3b]

# Fig. 3b

[Fig. 4a]

# Fig. 4a

[Fig. 4b]

# Fig. 4b

[Fig. 5a]

# Fig. 5a

[Fig. 5b]

# Fig. 5b

[Fig. 6]

# Fig. 6

[Fig. 7]

# Fig. 7

[Fig. 8a]

## Fig. 8a

[Fig. 8b]

## Fig. 8b

EP 4 207 077 A1

[Fig. 9a]

# Fig. 9a

230

240    250

[Fig. 9b]

# Fig. 9b

260

240    270

18

[Fig. 9c]

# Fig. 9c

[Fig. 9d]

# Fig. 9d

Europäisches
Patentamt

European
Patent Office

Office européen
des brevets

# RAPPORT DE RECHERCHE EUROPEENNE

Numéro de la demande

**EP 22 21 5760**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KR 2021 0117796 A (TOMOCUBE INC [KR]; KOREA ADVANCED INST SCI & TECH [KR]) 29 septembre 2021 (2021-09-29) * abrégé * * alinéa [0001] – alinéa [0035] * * alinéa [0047] – alinéa [0085] * * alinéa [0087] – alinéa [0102] * ----- | 1-7,9,10 | INV. G06T11/00 |
| X | Planche Benjamin: "Bridging the Realism Gap for CAD-Based Visual Recognition" In: "Bridging the Realism Gap for CAD-Based Visual Recognition", 17 septembre 2019 (2019-09-17), XP055808804, pages 1-172, * abrégé * * Section 5.5.1 * ----- | 1 | |
| X | EP 3 819 874 A1 (TOMOCUBE INC [KR]; KOREA ADVANCED INST SCI & TECH [KR]) 12 mai 2021 (2021-05-12) * abrégé * * alinéa [0034] – alinéa [0076] * ----- | 1 | |
| A | Matlock Alex ET AL: "Physical model simulator-trained neural network for computational 3D phase imaging of multiple-scattering samples", , 29 mars 2021 (2021-03-29), pages 1-16, XP093046103, Extrait de l'Internet: URL:https://arxiv.org/pdf/2103.15795.pdf [extrait le 2023-05-11] * le document en entier * ----- | 1-12 | |
| A,P | US 2022/260826 A1 (MOORE RODGER MICHAEL [US] ET AL) 18 août 2022 (2022-08-18) * le document en entier * ----- | 1-12 | |

DOMAINES TECHNIQUES RECHERCHES (IPC)

G06T

Le présent rapport a été établi pour toutes les revendications

| Lieu de la recherche | Date d'achèvement de la recherche | Examinateur |
|---|---|---|
| Munich | 11 mai 2023 | Leclercq, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 22 21 5760

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-05-2023

| Document brevet cité au rapport de recherche | Date de publication | Membre(s) de la famille de brevet(s) | Date de publication |
|---|---|---|---|
| KR 20210117796 A | 29-09-2021 | AUCUN | |
| EP 3819874 A1 | 12-05-2021 | CN 112782165 A | 11-05-2021 |
| | | EP 3819874 A1 | 12-05-2021 |
| | | JP 7122769 B2 | 22-08-2022 |
| | | JP 2021076575 A | 20-05-2021 |
| | | KR 20210054183 A | 13-05-2021 |
| | | US 2021134054 A1 | 06-05-2021 |
| | | WO 2021091027 A1 | 14-05-2021 |
| US 2022260826 A1 | 18-08-2022 | AU 2019403134 A1 | 17-06-2021 |
| | | BR 112021011719 A2 | 31-08-2021 |
| | | CA 3122853 A1 | 25-06-2020 |
| | | CN 113939728 A | 14-01-2022 |
| | | EP 3899500 A1 | 27-10-2021 |
| | | JP 2022513494 A | 08-02-2022 |
| | | KR 20210113236 A | 15-09-2021 |
| | | US 2022043251 A1 | 10-02-2022 |
| | | US 2022260826 A1 | 18-08-2022 |
| | | WO 2020131864 A1 | 25-06-2020 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SHWETADWIP C et al.** *Optica,* Septembre 2019, vol. 6 (9), 1211-1219
- **ULUGBEK S K et al.** *Optica,* Juin 2015, vol. 2 (6), 517-522
- U-Net : Convolutional Networks for Biomedical Image Segmentation. **RONNEBERGER, O. ; FISCHER, P. ; BROX, T.** Lecture Notes in Computer Science. Springer International Publishing, 2015, 234-241

- **KINGMA, D. P. ; BA, J.** Adam: A Method for Stochastic Optimization. *arxiv:1412.6980. Published as a conférence paper at the 3rd International Conférence for Learning Représentations, San Diego, 2015,* 2014